# EUROPEAN PATENT APPLICATION

(11) **EP 1 708 376 A1**
(43) Date of publication of application: **04.10.2006**
(21) Application number: 06006454.0
(22) Date of filing: 28.03.2006
(51) Int. Cl.: H04B 1/707

(54) **Base station device using an FFT-synchronisation**

(30) Priority: 29.03.2005 JP 2005093650; 25.08.2005 JP 2005243921
(71) Applicant: Hitachi Kokusai Electric Inc., Nakano-ku Tokyo (JP)
(72) Inventor: Yotsumoto, Koji c/o Hitachi Kokusai Electric Inc., Nakano-ku, Tokyo (JP); Kushioka, Yoichi c/o Hitachi Kokusai Electric Inc., Nakano-ku, Tokyo (JP)
(74) Representative: Thun, Clemens

(57) **Abstract**

A base station device capable of easily conducting large-scale searches for a number of channels by execution of software is provided. A first filtering section filters reception data to which FFT has been applied by multiplying the reception data by rectangular wave window. A second FFT section applies FFT to respective codes stored in a code storage section. A multiplication section calculates correlation values by multiplying the reception data after FFT by the codes after FFT. A second filtering section filters the calculated correlation values by multiplying the correlation values by Hamming window. An averaging section averages the filtered data. An IFFT section applies IFFT to the averaged data to produce a delay profile. A path search section searches respective paths of the channels based on delay profiles produced for each of the different channels.

## Description

### BACKGROUND OF THE INVENTION

### 1. Field of the invention

The present invention relates to a base station device used in a CDMA (code division multiple access) mobile communication system, and more particularly to a base station device which conducts searches by execution of software.

### 2. Description of the Related Art

For example, JP-A-2004-32568 discloses a method of conducting high-speed searches by execution of software using a DSP (digital signal processor) through the processing of FFT (fast Fourier transform) and IFFT (inverse fast Fourier transform).

However, according to the method shown in JP-A-2004-32568, it is not considered that the searches are executed for a number of channels.

Additionally, when this method is applied to a wireless base station device, synchronization detection of spread codes in a wide dynamic range is required.

Accordingly, it is an object of the invention to provide a base station device capable of easily conducting large-scale searches for a number of channels by execution of software.

It is another object of the invention to provide a synchronism detection device capable of detecting synchronism in a wide dynamic range.

### SUMMARY OF THE INVENTION

In order to achieve the above objects, a base station device according to the invention is a base station device for conducting searches for a plurality of channels to each of which different timing is given in time domain, which includes: first frequency transforming means for transforming signals in time domain having predetermined codes corresponding to each of the channels into signals in frequency domain; second frequency transforming means for transforming the predetermined codes into codes in frequency domain based on the timing; and search means for conducing searches for the plural channels based on the correlations between the signals and the predetermined codes in frequency domain after the frequency transform.

It is preferable that the first frequency transforming means transforms the signals into signals in frequency domain setting a number of quantization at a predetermined number, and that the second frequency transforming means transforms the predetermined codes into codes in frequency domain setting a number of quantization at a number calculated by multiplying the predetermined number by a sequential number, and repeats the frequency-transformed codes the number of times equal to the sequential number before outputting the results.

It is also preferable that the search means includes: limiting means for limiting the frequency-transformed signals to predetermined frequency domain; time-transforming means for transforming the limited signals into signals in time domain; and path search means for conducting path searches for the plural channels based on the time-transformed signals.

A synchronism detecting device according to the invention includes: means for multiplying reception signals (such as preamble signals) by despread codes in frequency domain; retrieval means for retrieving the maximum value of the results of multiplication; gain value determining means for determining a gain value based on the maximum value; gain control means for controlling gains for the results of multiplication in frequency domain based on the gain value; and threshold determining means for determining a threshold used for synchronism detection based on the maximum value.

It is preferable that the gain value determining means dynamically determines the gain value based on the number of digits of the maximum value.

It is also preferable that the threshold determining means dynamically determines the threshold used for synchronism detection based on the number of digits of the maximum value.

The base station device according to the invention can easily conduct large-scale searches for a number of channels by execution of software.

Additionally, the synchronism detection device according to the invention can detect synchronism in a wide dynamic range.

### BRIEF DESCRIPTION OF THE DRAWINGS

Fig. 1 shows an example of W-CDMA type mobile communication system 1.
Fig. 2 is a block diagram showing a structure of a first base station 2.
Fig. 3 is a block diagram showing a structure of a first delay profile detection section 22 of the first base station 2 according to the invention.
Fig. 4 shows a hardware structure of a baseband section 20 of the base station 2 according to the invention.
Fig. 5 is a block diagram showing a structure of a matched filter.
Fig. 6 shows a relationship between convolution calculation and a delay profile.
Fig. 7 shows a relationship between FFT/IFFT and a delay profile.
Figs. 8A and 8B are explanatory views showing a redundant component produced by FFT.
Fig. 9 shows characteristics of DPT exhibited in FFT.
Figs. 10A and 10B show correlation calculation for receptions of two antennas, wherein Fig. 10A shows an example of a relationship between data and codes and Fig. 10B shows an example of correlation gains of a delay profile.
Fig. 11 shows code arrangements with timing.
Fig. 12 is a flowchart showing FFT processing using 4N point FFT.
Fig. 13 is a flowchart showing FFT processing using N point FFT.
Fig. 14 shows rectangular wave window multiplied by data to which FFT has been applied.
Fig. 15 shows Hamming window multiplied by the correlation values calculated by multiplying reception data by codes in frequency domain.
Fig. 16 is a flowchart showing processes of search executed by the base station 2.
Figs. 17(a), 17(b), 17(c), 17(d) show delay profiles.
Figs. 18(a), 18(b), 18(c) show delay profiles after gain control.
Figs. 19(a) and 19(b) show delay profiles where gains are varied.
Fig. 20 shows a structure of a wireless base station device according to the invention.
Fig. 21 shows a function structure of a baseband signal processing section.
Fig. 22 is a flowchart showing the flow of synchronism detection processes performed by the baseband signal processing section.
Figs. 23(a), 23(b), 23(c) showdelayprofiles in frequency domain.

### DETAILED DESCRIPTION OF THE PREFERRED EMBODIMENTS

### Background of the Invention

Before discussing embodiments according to the invention, the situation under which the invention has been developed is initially explained so that the invention can be more easily understood.

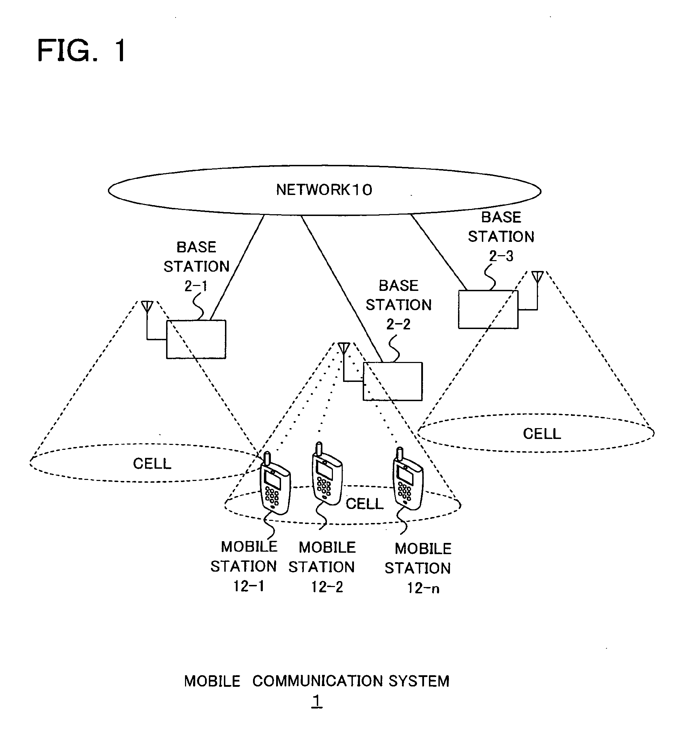

Fig. 1 shows an example of a W-CDMA type mobile communication system 1.

As illustrated in Fig. 1, the mobile communication system 1 includes base stations 2-1 through 2-3 connected with each other through a network 10, and mobile stations 12-1 through 12-n communicating with the base stations.

When referring to one of the plural base stations 2-1 through 2-3, for example, without specifying which one of these, this base station is abbreviated as the base station 2 or the like in some cases.

In the respective figures, like reference numerals are given to substantially like components.

In the mobile communication system 1, a plurality of paths having different propagation time are produced depending on the distance between the base station 2 and the mobile station 12 and buildings or the like existing therebetween.

Additionally, random fluctuations of electric field strength called "fading" are caused due to reflection or scattering by the buildings or the like.

### First Embodiment

The first base station 2 in a first embodiment according to the invention is now explained.

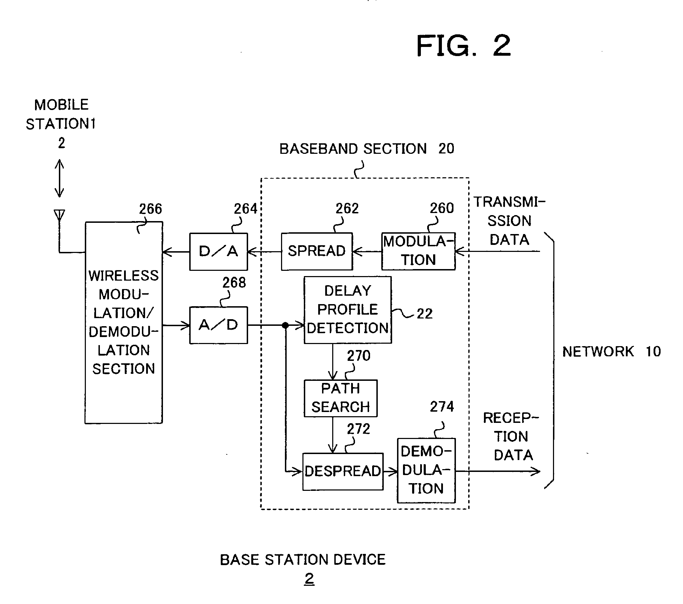

Fig. 2 is a block diagram showing a structure of the first base station 2.

As illustrated in Fig. 2, the first base station 2 includes a first baseband section 20, a D/A converter 264, a wireless modulation/demodulation section 266, and an A/D converter 268. The baseband section 20 has a modulation section 260, a spread section 262, a first delay profile detection section 22, a first path search section 270, an despread section 272, and a demodulation section 274.

By using these sections constituting the base station 2, the base station 2 transmits data received through the network 10 to the mobile station 12. Then, the base station 2 receives signals from the mobile station 12, detects the reception data from the received signals, and outputs the data to the network 10.

The modulation section 260 modulates the transmission data received from the network 10 and outputs the modulated data to the spread section 262.

The spread section 262 spreads the modulated transmission data and outputs the spread data to the D/A converter 264.

The D/A converter 264 converts the spread transmission data into analog data, and outputs the analog data to the wireless modulation/demodulation section 266.

The wireless modulation/demodulation section 266 converts the analog transmission data into wireless signals in a wireless frequency band, and sends the wireless signals to the mobile station 12.

The wireless modulation/demodulation section 266 receives the signals in the wireless frequency band transmitted from the mobile station 12, converts the received signals into baseband signals, and outputs the baseband signals to the A/D converter 268.

The A/D converter 268 converts the baseband signals into digital signals, and outputs the digital signals to the baseband section 20.

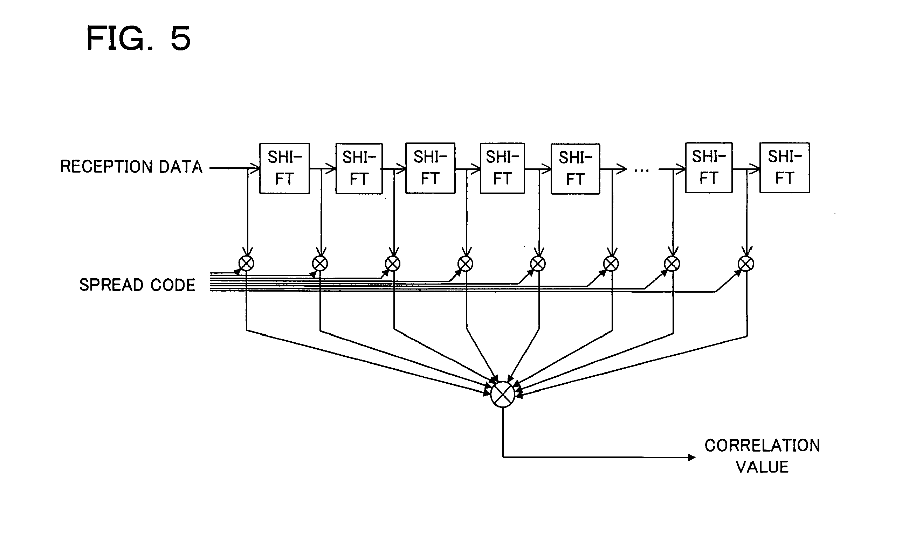

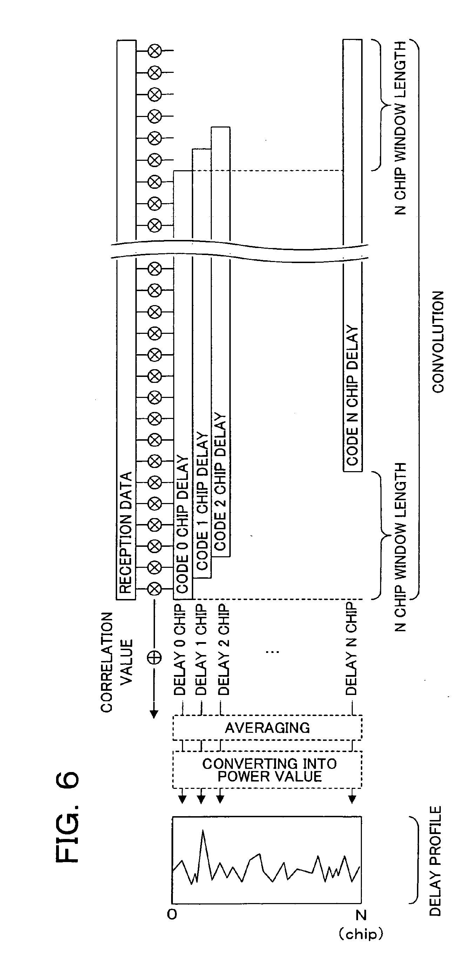

In the baseband section 20, the first delay profile detection section 22 produces a delay profile while shifting timing of spread codes used for identifying the respective mobile stations 12 minutely by one chip for each code so as to use over sampling which is usually employed. This process will be described later with reference to Figs. 5 and 6.

The path search section 270 detects paths based on the produced delay profile in the order starting from a path having the largest reception power.

The despread section 272 inversely spreads the reception signals for each of the detected paths.

The demodulation section 274 demodulates the inversely spread data and outputs the demodulated data to the network 10.

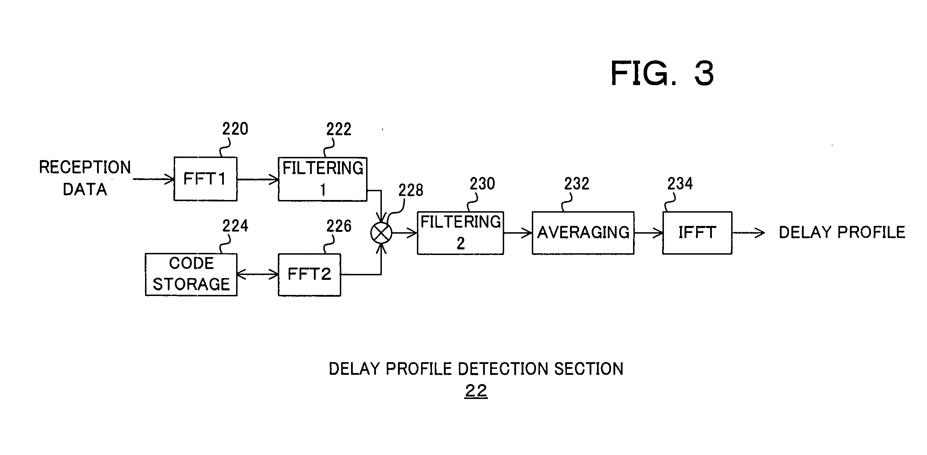

Fig. 3 is a block diagram showing the structure of the first delay profile detection section 22 of the first base station 2 according to the invention.

As shown in Fig. 3, the fist delay profile detection section 22 has a first FFT section 220 (first frequency transforming means), a first filtering section 222 (limiting means), a code storage section 224, a second FFT section 226 (second frequency transforming means), a multiplication section 228, a second filtering section 230 (limiting means), averaging section 232, and an IFFT section 234 (time transforming means).

The first FFT section 220 receives reception data from the A/D converter 268, applies FFT to the reception data, and output the frequency components of the reception data to the first filtering section 222.

More specifically, the first FFT section 220 applies FFT to the reception data based on not timing of the plural channels but fixed timing.

The first FFT section 220 also inserts redundant data into the reception data to match the data with over sampling, and applies FFT to the data having the redundant data.

The details of FFT will be explained later.

The second FFT section 226 is stored in the code storage section 224. The second FFT section 226 applies FFT to codes (spread codes; predetermined codes) corresponding to the respective channels, and outputs the frequency components of the codes to the multiplication section 228.

The second FFT section 226 stores the results of FFT in the code storage section 224. For the codes to which FFT has been once applied, the second FFT section 226 obtains the results after FFT by referring to the code storage section 224 and outputs the results to the multiplication section 228.

The second FFT section 226 alters timing of FFT for the respective codes in accordance with timing offset determined for each channel.

The second FFT section 226 applies N point (such as N=1024) FFT to the codes.

The details of FFT processing executed by the second FFT section 226 will be described later.

The code storage section 224 stores codes, and data in frequency domain obtained after FFT is applied to codes.

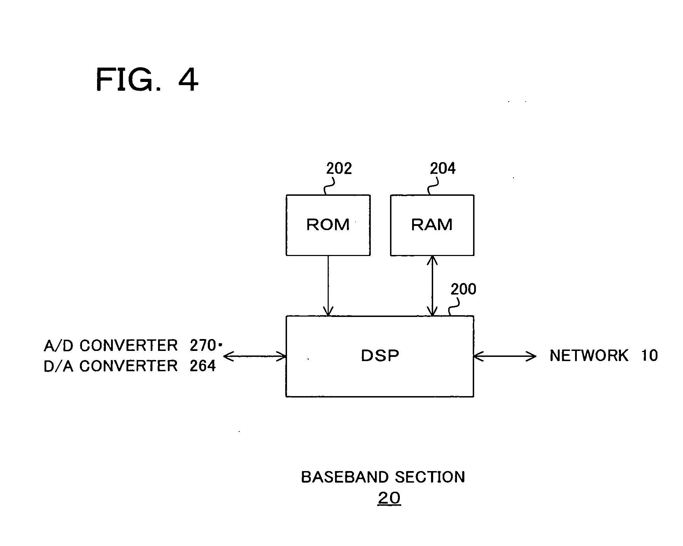

The code storage section 224 is created by storing codes and the like in a RAM 204 which will be described referring to Fig. 4.

The first filtering section 222 filters the data to which FFT has been applied by the first FFT section 220 in frequency domain, and outputs the filtered data to the multiplication section 228.

The first filtering section 222 multiplies the data after FFT by rectangular wave window, for example, in frequency domain to separate the high frequency component and the low frequency component from each other, and outputs the resultant data to the multiplication section 228.

In case that filtering such as roll-off filtering has been applied to the data prior to the first FFT section 220, the first filtering section 220 may be eliminated.

The details of filtering will be discussed later.

The multiplication section 228 multiplies the reception data filtered by the first filtering section 222 in frequency domain by the codes to which FFT has been applied by the second FFT section 226 in frequency domain, and outputs the results to the second filtering section 230.

The second filtering section 230 filters the correlation values between the reception data and codes outputted from the multiplication section 228, and outputs the filtered data to the averaging section 232.

The averaging section 232 averages the data received from the second filtering section 230, and outputs the averaged data to the IFFT section 234.

The averaging section 232 may be positioned not after the second filtering section 230 but after the IFFT section 234.

The IFFT section 234 receives the data averaged by the averaging section 232 in frequency domain, and applies IFFT to the data to produce a delay profile.

The path search section 270 (Fig. 2) executes searches for each of the plural channels based on the respective delay profiles obtained from the respective correlation values between the reception data and the codes reflecting timing of each channel.

By this method, the base station 2 conducts searches for the plural channels.

Fig. 4 shows a hardware structure of the baseband section 20 (Fig. 2) in the base station 2 according to the invention.

As shown in Fig. 4, the base station 2 includes a DSP 200, a ROM 202, and the RAM 204.

The baseband section 20 is operated by execution of software stored in the ROM 202 and performed by the DSP 200.

The modulation section 260, the spread section 262, the delay profile detection section 22, the path search section 270, the despread section 272, and the demodulation section 274 appropriately operate under the software executed by the DSP 200 and dedicated hardware, or either one of these.

The software used in these sections is provided as independent software modules, and appropriately added or deleted as necessary. The software can be started by OS (not shown) or the like based on arbitrary timing.

The DSP 200 has a function for exchanging input and output with the communication functions through the network 10, and with other hardware structures such as the D/A converter 264 and the A/D converter 268.

Production of a delay profile is now described with reference to Figs. 5 and 6.

Fig. 5 is a block diagram showing a structure of a matched filter.

As shown in Fig. 5, the matched filter calculates correlation values between reception signals and spread codes using despreading.

Initially, the matched filter acquires one point from the whole sum of a plurality of results obtained by multiplying the reception data by the spread codes (correlation calculation) .

Next, the matched filter shifts the reception data to the next one and repeats the same correlation calculation.

Then, the matched filter shifts the reception data to the one after the next and repeats the same correlation calculation (convolution calculation).

In this manner, correlation values are obtained by the convolution calculation of the matched filter while shifting timing for the same spread codes.

Fig. 6 shows a relationship between convolution calculation and a delay profile.

As shown in Fig. 6, a delay profile is produced by despreading for one symbol section (N chips) while shifting timing of spread codes by one chip for each code.

The delay profile is obtained by averaging the values calculated by the correlation calculation and convolution calculation of the reception data and the spread codes delayed by 0 through N chips, and then converting the values into power values and plotting the power values on the timing axis.

When the range of search is expanded and delays produced between the base station 2 and the mobile station 12 are absorbed using the matched filter, the number of taps increases and the circuit scale of the matched filter becomes extremely large.

Therefore, searches are desired to be conducted using the DSP operating under software, for example.

For conducting searches, reduction of interferences and noises is important considering wireless characteristics.

In the processing using the matched filter, the base station 2 lowers the output level of the correlation calculation by a fixed amount to prevent overflow of the maximum input word length.

Thus, when the input word length is small, the output level may be cut out. As a result, the effective word length is not sufficiently utilized, and the effect of decrease in interferences and noises is deteriorated in some cases.

Additionally, digital noises (such as rounding errors caused in digital calculation) may be some influences.

Furthermore, various interferences cannot be sufficiently reduced only by a FIR (finite impulse response) filter in some cases.

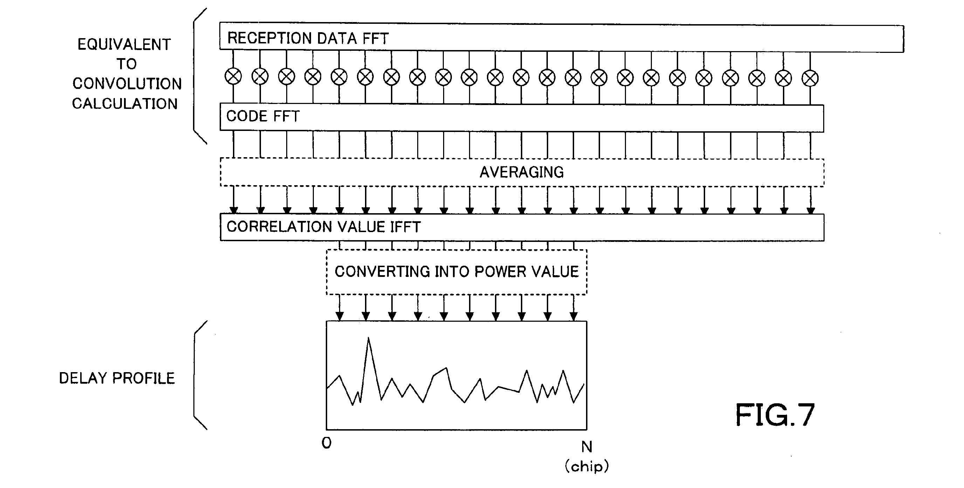

Fig. 7 shows a relationship between FFT/IFFT processing and a delay profile.

As shown in Fig. 7, the base station 2 calculates frequency components of the correlation values by multiplying the frequency components of the reception data by the frequency components of the spread codes. Then, the base station 2 averages the calculated values, applies IFFT thereto, and converts the values into power values after IFFT to extract a delay profile.

The averaging process performed by the averaging section 232 is now explained in detail.

The averaging process includes in-phase addition average (also referred to as "voltage addition average") in which the phases are matched, and power addition average which is averaged after the sum of the squares of signals as complex signals is obtained.

When fluctuations of the path are not great, noise reduction effect is larger in the voltage addition method.

However, if the path is drifting (rotating on the phase plane) or the like cases, the accuracy of the path itself will be deteriorated when the voltage addition method is used. In this case, more preferable characteristics can be obtained by the power addition method.

It is therefore necessary to determine which method is used to what extent for each system according to the wireless environment.

For voltage addition average in the FFT processing, the method of voltage addition in frequency domain performed prior to IFFT is used or the ordinary method of voltage addition in time domain performed after IFFT is used.

In this embodiment, the method of voltage addition in frequency domain is employed in view of the process amount and the characteristics.

The FFT method shown in Fig. 7 is a technique capable of processing at higher speed than in the matched filter method.

However, the IFFT processing itself is not light-load processing.

In case of voltage addition in time domain, the number of processes for returning to time domain, that is, the number of calculations in IFFT increases.

However, since no IFFT calculation is required in the case of voltage addition in frequency domain, the processing speed can be further increased.

Additionally, in case of voltage addition in time domain, a peak is produced at the path position in the delay profile and energy is concentrated on this peak. As a result, overflow may be caused in the averaging process.

It is therefore necessary to lower the calculation results by providing right bit shift all the time so that overflow is not caused. Thus, the characteristics are deteriorated, obtaining a less preferable SN ratio than the SN ratio which is practically obtainable.

In the FFT method, since the peak energy expands throughout frequency domain, possibility of overflow can be reduced.

Additionally, in the FFT method, the noise component is reduced in frequency domain and the SN ratio is improved prior to the returning process to time domain by IFFT.

While the averaging process is executed before IFFT in this embodiment, this process may be positioned after IFFT or the process for converting into power values.

The calculation quantity in the FFT method is smaller than the convolution calculation quantity in the matched filter method (Fig. 5).

When the window size is N chips and multiplications for four times over sampling are required, the processing amount for the correlation detection, i.e., multiplications in frequency domain in the FFT method is 1/ (4N) of the processing amount for the correlation detection, i.e., convolution calculation in time domain in the matched filter method.

For example, when the base station 2 executes FFT/IFFT processing setting the number of points at 4,096 to quantize the reception data using four times over sampling, the ratio of the processing amount in the base station 2 to the processing amount of convolution calculation in the matched filter method is 1:4,096.

As apparent from above description, in the matched filter method, the processing amount is large and thus the correlation calculation is not executed in a larger range than the search window size.

In the FFT method, since the FFT size has a fixed length, FFT for obtaining a target search window size has redundancy larger than that size.

Thus, when FFT having a large number of points is used, the base station 2 can easily obtain delay profiles having large window size.

For example, when search window of 1,024 points (i.e., 256 chips x four times over sampling) is required, FFT/IFFT having 1,024, 4,096, or larger number points (multiples of 4) is selected in case of FFT having a radix 4.

The results obtained from the correlation calculation may have an area containing noise.

The noise may be included because FFT has a fixed length.

Thus, it is necessary to remove the noise by cutting off the second half.

For example, in case of FFT having 1,024 points, 2,046 points are effective when the area containing noise is removed.

That is, redundancy twice larger than the necessary window size is naturally produced.

Thus, when the path fluctuates and the search window needs to be moved, required control is only shifting the position for cutting out the search window since the correlation calculation required for the moved amount is already completed because of this redundancy.

More specifically, since the region to be calculated in FFT and IFFT is larger than the required delay profile, the path search by the base station 2 can be easily realized by extracting a necessary part from the calculated region.

In addition, the path search can easily follow fluctuations of the search window position in accordance with fluctuations of the path.

For example, when the output data obtained by FFT/IFFT is data for 1,024 chips in the base station 2, 512 chips in the second half are cut off as redundancy and 512 chips in the first half are regarded as output data.

When the delay profile actually used in the base station 2 has 256 chip length, for example, the base station 2 further regards 256 chips as redundancy and uses them for absorbing fluctuations of the search window position and chip offset which will be described later.

As obvious from above, the FFT method has processes for applying FFT to fixed length data and spread codes, applying IFFT after multiplying those, and obtaining a delay profile.

The calculation executed in the FFT method is equivalent to the convolution calculation in time domain.

The noise area caused by FFT is now explained in detail.

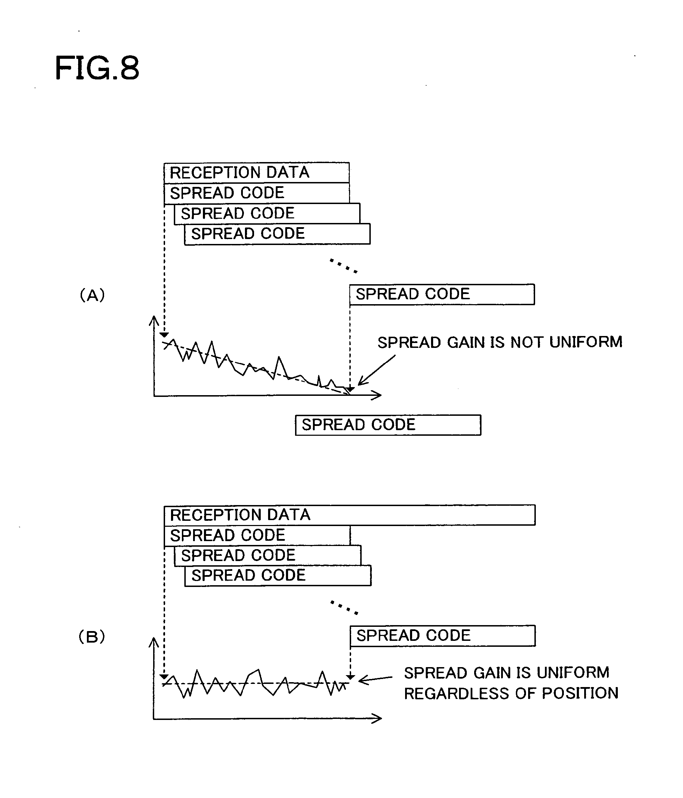

Figs. 8A and 8B show redundant components produced by FFT.

As illustrated in Fig. 8A, when the data and the spread codes have the same length, the numbers of points of the respective data and codes used for calculation for obtaining the sum of products are different for each point of the delay profile. As a result, gains are not equally given.

As illustrated in Fig. 8B, when the length of the spread codes is half of the length of the data, for example, the first half can obtain equal gains. Thus, the second half is cut off as redundancy and only the first half is used so that the spread gains can be uniform regardless of the positions.

The details of the FFT method are now discussed.

FFT is a high-speed process of DFT (definite Fourier transform).

Thus, FFT has the characteristics of DFT.

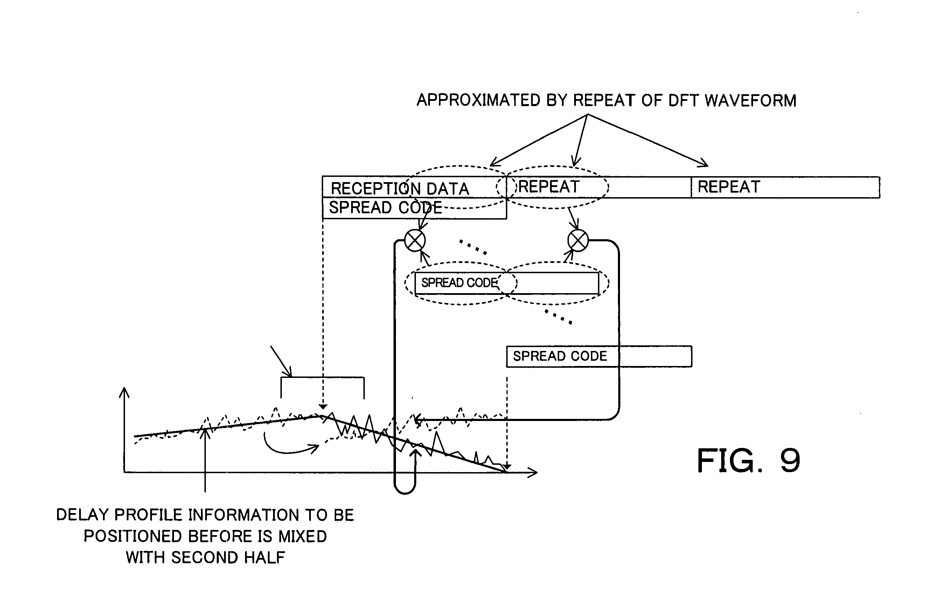

Fig. 9 shows the characteristics of DFT exhibited in FFT.

As illustrated in Fig. 9, since the waveform which is originally infinite is calculated as finite in FFT, calculations are executed assuming that the same waveforms are repeated.

As a result, information which should be positioned before the target delay profile area is mixed with the second half.

When it is known that no path exists (mixture is not caused) in the second half, the information positioned before the first half can be obtained by utilizing the calculation characteristics of FFT.

An example of FFT is further explained.

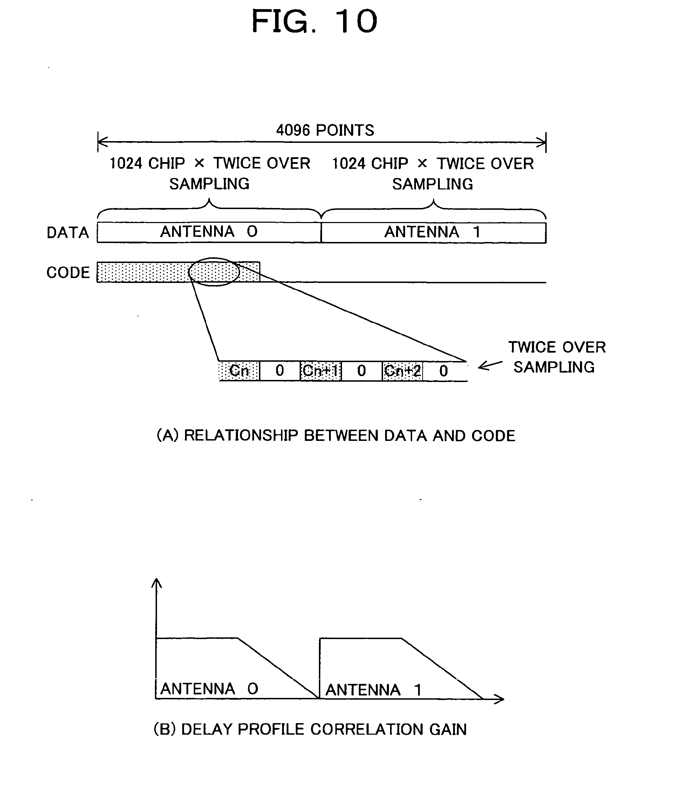

Figs. 10A and 10B show a correlation calculation for the reception by two antennas. Fig. 10A shows an example of the relationship between data and codes, and Fig. 10B shows an example of correlation gains of a delay profile.

As illustrated in Figs. 10A and 10B as an example, a method of reducing fading effect caused in radio propagation using two or more receiving antennas is employed in a wireless system in some cases.

The example shown in Figs. 10A and 10B is the case using twice over sampling.

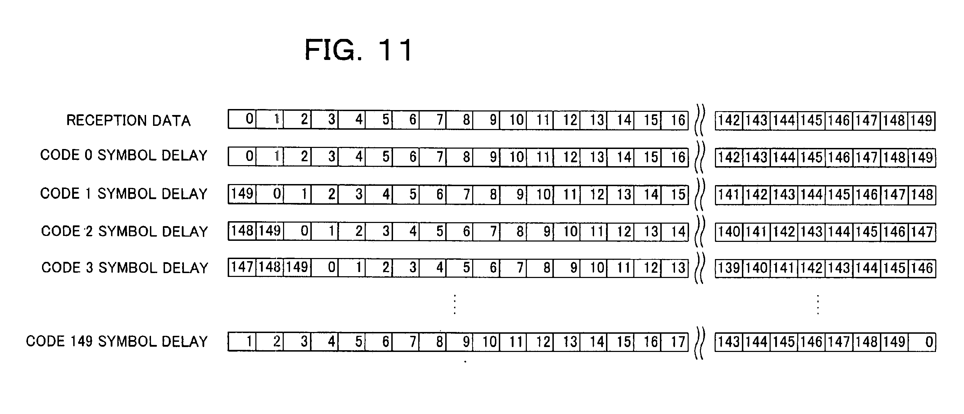

Fig. 11 shows code arrangements with timing.

As shown in Fig. 11, one round of the code length corresponds to 150 symbols in the mobile communication system 1.

One symbol is constituted by 256 chips in this embodiment.

In the mobile communication system 1, timing for data transmission and reception synchronizes with symbols.

Timing offset is different in different channels, and each timing offset is put into symbols.

Thus, as shown in Fig. 11, the second FFT section 226 shifts the initial part of the codes by the amount of offset so as to deal with different timing offset.

When a propagation delay is produced between the base station 2 and the mobile station 12, data transmission and reception timing synchronizes with a position shifted from the symbol point by the amount of the propagation delay.

In this case, the base station 2 absorbs the deviation from the symbol caused by the propagation delay by recognizing 256 chips as redundancy (Fig. 7), for example, in the data after IFFT.

In the CDMA system, rectangular crosses of spread codes are required for the plural channels based on the characteristics of the CDMA system.

Timing offset is positioned between channels, but the references of timing offset need to be synchronous for every 256 chips (symbol) so as to maintain rectangular crosses.

The plural channels transmitted from the base station 2 synchronize with symbols.

However, since propagation delays occur between the mobile station 12 and the base station 2, transmission from the mobile station 12 (i.e., reception at the base station 2) has propagation delays and thus the position shifted from the symbol point by this amount is the synchronous position (path position).

In this embodiment, a delay profile can be obtained for identical reception data by shifting code arrangements in accordance with timing offset for each symbol.

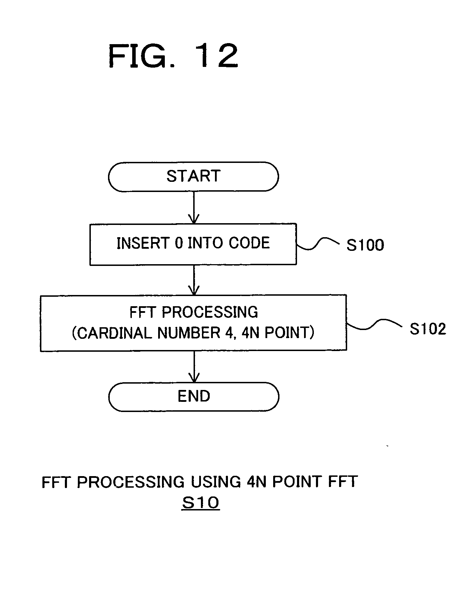

Fig. 12 is a flowchart showing FFT processing using 4N point FFT.

As shown in Fig. 12, the second FFT section 226 reads out codes from the code storage section 224 and inserts redundant data such as 0 (zero) into the codes in step 100 (S100).

In step 102 (S102), the second FFT section 226 applies FFT to the zero-inserted data setting the cardinal number at 4 and the number of points at 4N (e.g., 4,096; N=1024).

The second FFT section 226 outputs the data after FFT in frequency domain to the multiplication section 228.

The FFT processing having the radix 4 is more specifically discussed.

At this stage, the data after FFT has an order after bit reverse prior to IFFT.

In this order, the results of FFT calculations for over sampling in the range from 4ⁿ times to less than 4ⁿ⁺¹ times (n: 1 or larger integer, not exceeding the size of FFT) have such a pattern that the same value is repeated 4ⁿ times for each value.

More specifically, the same value is repeated four times in 4 times or 8 times over sampling, and 16 times in 16 times or 32 times over sampling, for example.

For generalization, in FFT processing having the radix S, the results of FFT calculations for over sampling in the range from Sⁿ times to less than Sⁿ⁺¹ times (n: 1 or larger integer, not exceeding the size of FFT) have such a pattern that the same value is repeated Sⁿ times for each value in the order after bit reverse prior to IFFT processing.

In case of twice over sampling in FFT having the radix 4, each set of values is repeated twice, but the degree of compression is the same as that in the case of n=1.

When the FFT size used is 4^{N} points and FFT smaller than 4^{N-n} is used for over sampling in the range from 4ⁿ times to less than 4ⁿ⁺¹ times utilizing the above characteristics, the same results are obtained as data compressed to 1/4ⁿ. As a result, memory is decreased and processing time is reduced.

For example, when the spread code is {a, b, c, d, and others} and four times over sampling is used, the second FFT section 226 inserts zero into the spread code so that information contained in the spread code can appear at intervals of four, and puts zero in all the data in the second half.

In this case, the spread code after zero insertion is {a, 0, 0, 0, b, 0, 0, 0, c, 0, 0, 0, d, 0, 0, 0, through 0, 0, 0, 0, 0, 0, 0}.

Then, the second FFT section 226 applies FFT having the radix 4 to the spread codes after zero insertion.

The data after FFT has frequency components having such a pattern that the same value is repeated four times for each value as {A, A, A, A, B, B, B, B, C, C, C, C, D, D, D, D, and others}.

When the spread code is {a, b, c, d, and others} and twice over sampling is used, the second FFT section 226 inserts zero into the spread code so that information contained in the spread code can appear at intervals of two, and puts zero in all the data in the second half.

In this case, the spread code after zero insertion is {a, 0, b, 0, c, 0, d, 0, through 0, 0, 0, 0, 0, 0, 0}. The spread code after FFT has frequency components having such a pattern that the same value is repeated twice for each value as {A, C, A, C, L, K, L, K, B, D, B, D, and others}.

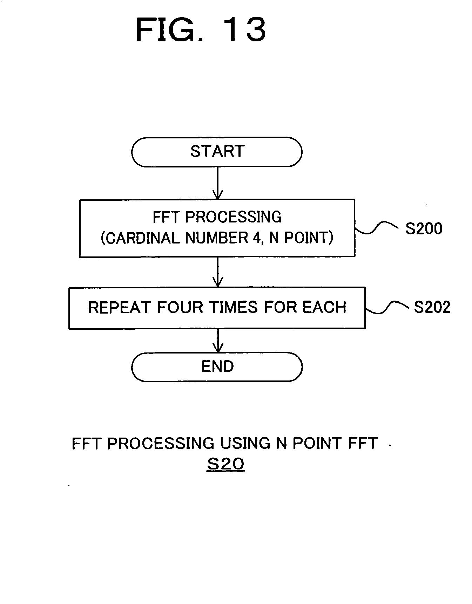

Fig. 13 is a flowchart showing FFT processing using N point FFT.

As shown in Fig. 13, the second FFT section 226 reads out codes from the code storage section 224 and applies FFT to the codes setting the radix 4 and the number of points at N in step 200 (S200).

In step 202 (S202), the second FFT section 226 repeats the data after FFT a number of times equal to the multiple of the number of times of over sampling (e.g., four times), and outputs the resultant data to the multiplication section 228.

When the code is {a, b, c, d, and others}, for example, the data after FFT is {A, B, C, D, and others}.

Thus, the data after FFT is the data from which the repeated data is removed and the same values are compressed.

The second FFT section 226 repeats the data compressed after FFT four times in the case of four times over sampling, and twice in the case of twice over sampling, for example.

When the same results are obtained, FFT having a smaller point number is performed at higher speed.

For example, the processing time of FFT having the point number of 1,024 is a quarter or shorter than the processing time of FFT having the point number of 4,096.

Additionally, since the data size after FFT is compressed to a quarter, only a small capacity of the RAM 204 (Fig. 4) is required.

Accordingly, the second FFT section 226 can perform FFT processing for codes at high speed.

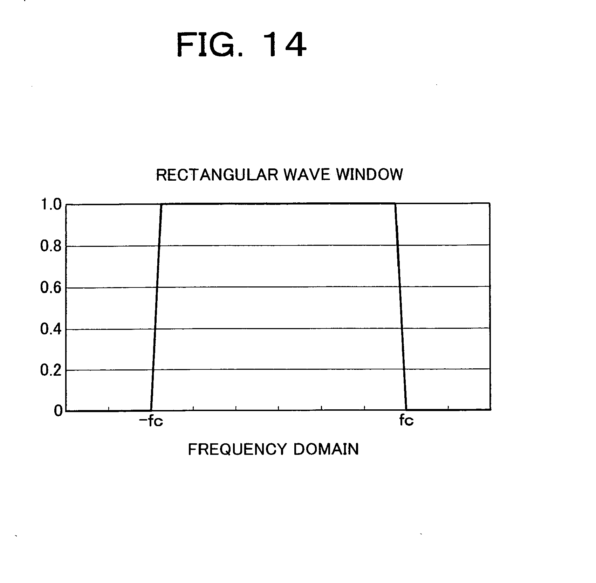

Fig. 14 shows square wave window to be multiplied by the data after FFT.

As shown in Fig. 14, the rectangular wave window has a high frequency component having a predetermined value (fc) or higher and a low frequency component having a predetermined value (-fc) or lower, separated from each other in frequency domain.

The data after FFT is multiplied by the rectangular wave window by the first filtering section 222 in frequency domain so that the high frequency component and the low frequency component can be removed from the data after FFT, and then outputted to the multiplication section 228.

By providing the predetermined separating frequency (fc), the frequency component where a number of noises may be generated is removed.

If rapid frequency characteristics are produced in this process, impulse responses may be expanded in time domain and thus interferences may be easily caused between chips. In this case, roll-off filtering is used to provide moderate separation.

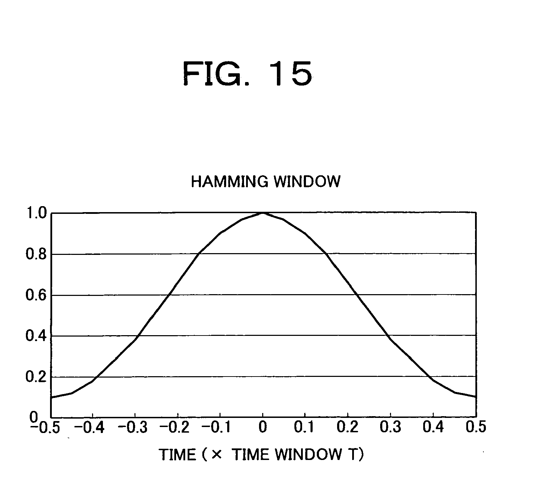

Fig. 15 shows Hamming window to be multiplied by the correlation values obtained by multiplying the reception data by the codes in frequency domain.

As shown in Fig. 15, the Hamming window removes errors in the high frequency area and low frequency area in frequency domain.

Since FFT is an approximate high-spread processing algorithm which limits waveforms to a finite length, errors are produced in the data after FFT in the high frequency area and low frequency area.

The second filtering section 230 removes these errors by multiplying the correlation values obtained after FFT by the Hamming window.

### Search by Base Station 2

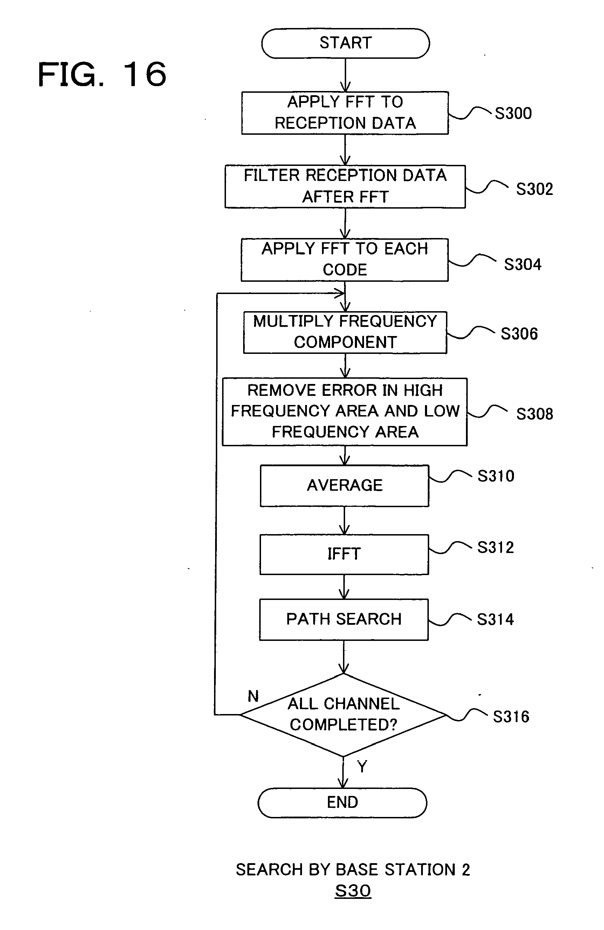

Fig. 16 is a flowchart showing processes of search conducted by the base station 2.

As shown in Fig. 16, the first FFT section 220 (Fig. 3) receives reception data converted by the A/D converter 268 (Fig. 2), applies FFT to the data, and outputs the data in frequency domain to the first filtering section 222 in step 300 (S300) .

In step 302 (S302), the first filtering section 222 multiplies the data in frequency domain received from the first FFT section 220 by rectangular wave window, and outputs the filtered data to the multiplication section 228.

In step 304 (S304), the second FFT section 226 refers to the code storage section 224 for the respective codes, applies FFT to the codes, and outputs the data in frequency domain to the multiplication section 228.

In step 306 (S306), the multiplication section 228 multiplies the reception data to which FFT has been applied by the codes to which FFT has been applied to obtain the correlation values, and outputs the correlation values to the second filtering section 230.

In step 308 (S308), the second filtering section 230 multiplies the calculated correlation values by Hamming window, and outputs the filtered data to the averaging section 232.

In step 310 (S310), the averaging section 232 averages the filtered data and outputs the averaged data to the IFFT section 234.

In step 312 (S312), the IFFT section 234 applies IFFT to the averaged data to produce a delay profile.

In step 314 (S314), the path search section 270 (Fig. 2) searches the respective paths of the corresponding channel based on the delay profile.

In step 316 (S316), the path search section 270 determines whether path search is completed for all the different channels.

If it is determined that search is completed for all the channels, the path search finishes. If not, the flow returns to step S306.

As described above, the base station 2 conducts searches for a plurality of channels.

The base station 2 fixes timing for applying FFT to the reception data, and alters the timing in accordance with timing offset determined for each of the channels. Thus, searches can be performed at high speed for the plural channels.

Since the base station 2 repeatedly uses the data to which FFT has been applied, the processing speed of FFT for the codes can be increased requiring only a small-scale structure.

Furthermore, since the base station 2 filters the data after FFT in frequency domain, the wireless characteristics can be improved.

### Second Embodiment

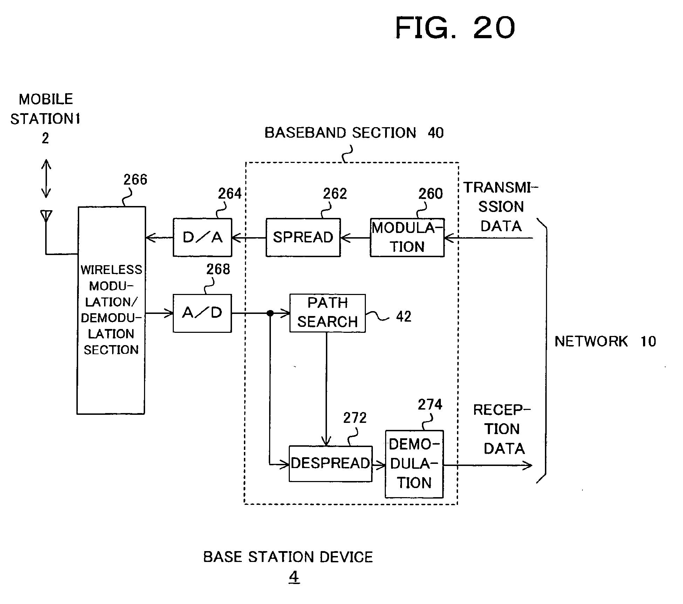

A second base station 4 (Fig. 20) in a second embodiment according to the invention is hereinafter described.

In a reception section of a wireless base station device or the like which employs W-CDMA method, despread processing (correlation detection processing) is conducted by execution of software using a DSP (digital signal processor) or the like. For carrying out the despread processing, a method using fast Fourier transform (FFT) and inverse fast Fourier transform (IFFI) has been proposed, for example.

Synchronism detection for spread codes is performed in a wireless base station device using this method in the following manner.

Initially, FFT is applied to reception data (or preamble) transmitted from a mobile terminal (mobile station) by the wireless base station device. Also, FFT is applied to scrambling codes prepared within the wireless base station device.

Next, the products of the reception data transformed into values in frequency domain by FFT and the scrambling codes transformed into values in frequency domain by FFT are calculated for the respective frequency components. That is, correlation values in frequency domain are calculated.

Subsequently, the correlation values in frequency domain thus obtained are returned to values in time domain by applying IFFT, and correlation values between the reception data and the scrambling codes are calculated. Then, gains of the calculated correlation values are controlled based on a predetermined gain value, and the controlled values are converted into power values to produce a delay profile. Thereafter, the delay profile thus obtained is compared with a predetermined threshold to detect paths and then detect synchronism.

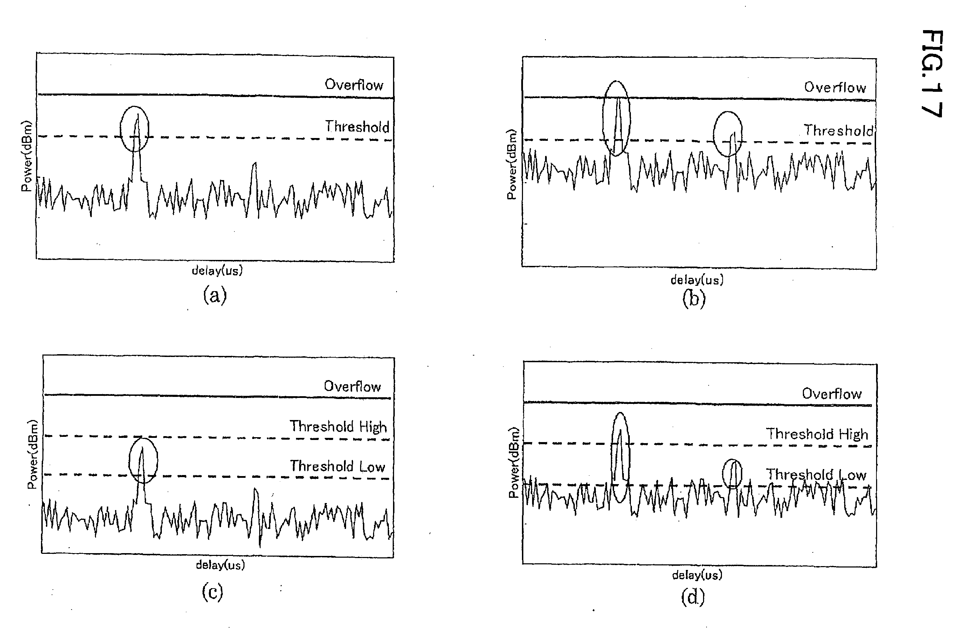

Figs. 17 (a), 17 (b), 17 (c), 17 (d) show delay profiles.

When signals are received, a peak is exhibited in delay time corresponding to a distance between a base station and a mobile terminal which outputs signals as shown in Fig. 17 (a) . The peak is compared with a predetermined threshold. If it is determined that the peak exceeds the threshold, the signals are recognized as paths and synchronism is detected. However, when excessive input level signals are received from the mobile terminal as shown in Fig. 17(b), overflow is caused in the calculation device such as a DSP. As a result, the relative connection with the threshold collapses, and thus signals which are not desired may be erroneously detected as paths.

When the signals are small as shown in Fig. 7(c), the synchronism detection performance can be increased by lowering the threshold. However, if large level signals are inputted with the threshold value lowered, detection errors will be caused as shown in Fig. 17(d).

In a delay profile, gains are generally controlled.

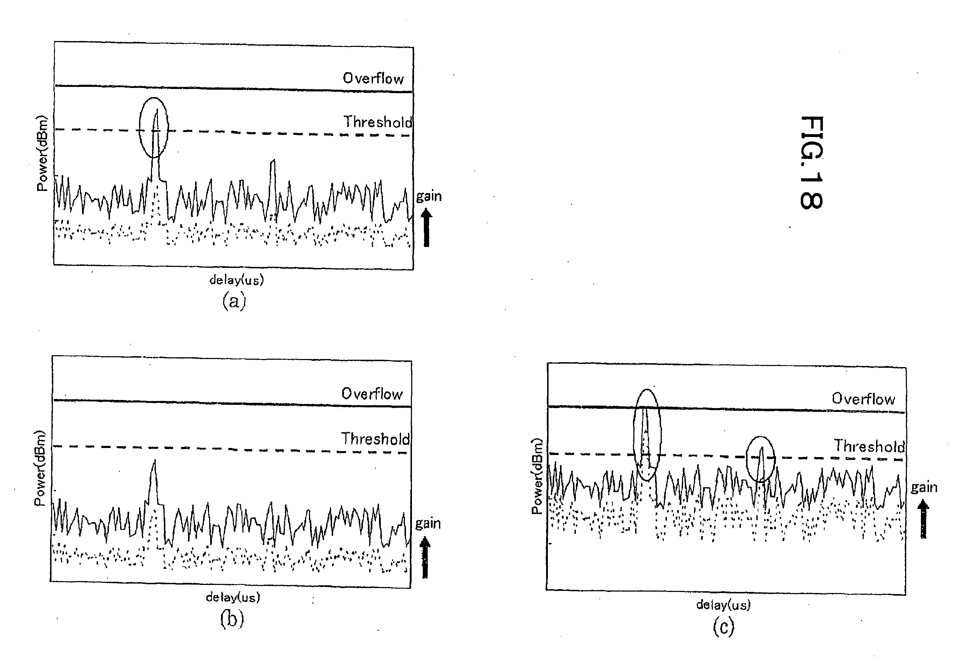

Fig. 18(a),18(b),18(c) show delay profiles in which gains are controlled. In these figures, the delay profiles before gain control are shown by dotted lines, and delay profiles after gain control are shown by solid lines.

In Fig. 18 (a), a peak can be detected by controlling gains. However, since input signals are originally small in Fig. 18 (b), a peak cannot be detected by giving gains equivalent to those in Fig. 18 (a) . On the other hand, since input signals are large in Fig. 18(c), overflow is caused at a peak desired and detection error is caused at a peak not desired when gains are given.

For preventing these problems, it is considered that gains are varied in accordance with reception conditions.

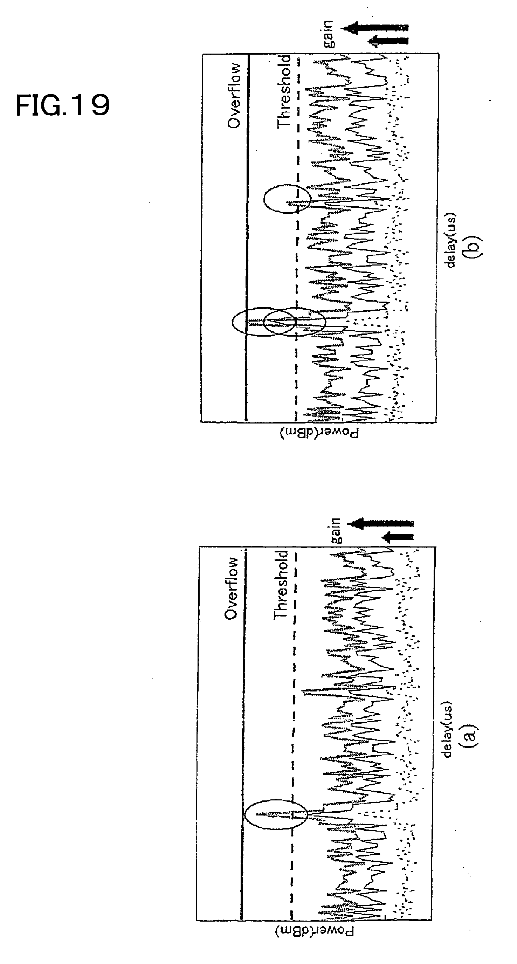

Figs. 19 (a) and 19 (b) show delay profiles when gains are varied. Similarly to the above case, the delay profiles before gain control are shown by dotted lines, and delay profiles after gain control are shown by solid lines in these figures. The delay profiles having small gains are shown by fine solid lines (deep solid lines), and the delay profiles having large gains are shown by bold solid lines (light solid lines).

As shown in Fig. 19(a), a peak cannot be detected when gains are small, but a peak can be detected by increasing gains. When power values prior to gain control are larger than those in Fig. 19(a) as shown in Fig. 19(b), a peak can be detected when gains are small. However, when excessive gains are given, overflow and detection error are caused.

In this example, the judgment reference for gain control is based on the power values of the delay prof ile in time domain. However, problems arise from this method. For preventing excessive input, reduction of overflow is one of the requirements, and it is thus considered that small gains are given so that overflow of the maximum value in the delay profile can be prevented. When gain control is thus targeted to only the maximum value, this method is effective for the case where an extremely large peak is exhibited. However, the synchronism detection performance is deteriorated in case of a peak not so large, low-level input signals or other cases since only small gains are given.

When large gains are given so as to increase the performance at the time of low-level input signals caused due to deterioration of signal reception environment or the like, prevention for excessive input is insufficient and thus overflow cannot be avoided. Therefore, it is difficult to prevent excessive input and also secure sufficient synchronism detection performance when gains are controlled in time domain.

As explained above, it is difficult to insure sufficient synchronism detection capability regardless of the level of input signals, that is, secure a wide dynamic range by the related-art synchronism detection means mentioned above.

In the following synchronism detection method used by a wireless base station according to the invention, a wide dynamic range is obtained so that sufficient synchronism detection capability can be secured regardless of the level of input signals.

Fig. 20 is a block diagram showing a structure of the second base station 4.

The second base station 4 is used in lieu of the first base station 2 shown in Fig. 2 in the W-CDMA type mobile communication system 1 shown in Fig. 1.

As shown in Fig. 20, the first baseband section 20 of the first base station 2 is replaced with a second baseband section 40 in the second base station 4. In the second baseband section 40, the delay profile detection section 22 and the first path search section 270 of the first baseband section 20 are replaced with a second path search section 42.

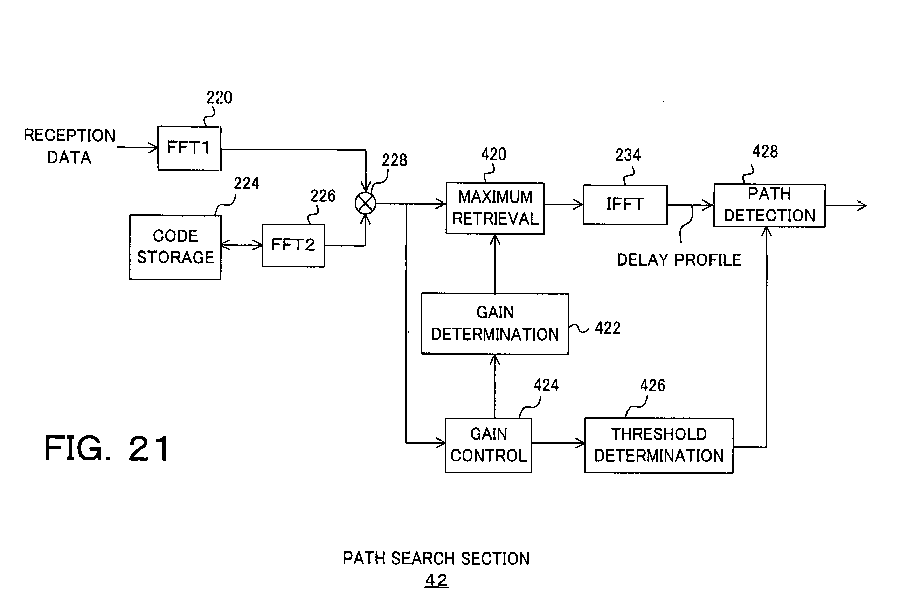

Fig. 21 shows a function structure of the path search section 42.

As shown in this figure, the path search section 42 has the FFT section 220, the code storage section 224, the FFT section 226, the multiplication section 228, a gain control section 424, the IFFT section 234, a path detection section 428, a maximum retrieval section 420, a gain value determining section 422, and a threshold determining section 426.

The respective components included in the path search section 42 are realized by executing programs stored in a memory such as a ROM using a DSP, for example.

The FFT section 220 applies FFT to reception data.

The code storage section 224 stores spread codes.

The FFT section 226 applies FFT to the spread codes stored in the code storage section 224.

The multiplication section 228 multiplies the results of the reception data after FFT outputted from the FFT section 220 by the results of the scrambling codes after FFT outputted from the FFT section 226.

The maximum retrieval section 420 retrieves the maximum value from the results of multiplication (plural values) outputted from the multiplication section 228.

Thus, the maximum retrieval section 420 acquires the maximum correlation value between the reception data and the scrambling codes in frequency domain.

The gain value determining section 422 determines a gain value based on the maximum correlation value obtained by the maximum retrieval section 420.

For example, the gain value determining section 422 obtains the number of digits of the maximum value, and determines a gain value based on this number of digits.

The gain value determining section 422 may determine a gain value based not on the number of digits of the maximum value but on the maximum value itself.

In this case, gains can be more accurately controlled based on the maximum value itself.

The gain value control section 424 controls gains for the results of multiplication outputted from the multiplication section 228 based on the gain value determined by the gain value determining section 422.

Thus, the gain value control section 424 controls gains for correlation values in frequency domain.

The IFFT section 234 applies IFFT to the correlation values in frequency domain after gain control to return the correlation values to time domain. Then, the IFFT section 234 calculates correlation values between the reception data and the scrambling codes, and converts the correlation values into power values to produce a delay profile.

The IFFT section 234 also controls gains.

The threshold determining section 426 determines a threshold used for path detection based on the maximum correlation value obtained by the maximum retrieval section 420.

For example, the threshold determining section 426 obtains the number of digits of the maximum value calculated by the maximum retrieval section 420, and determines a threshold used for path detection based on this number of digits.

The threshold determining section 426 may determine a threshold for path detection based not on the number of digits of the maximum value but on the maximum value itself.

In this case, the threshold can be more accurately controlled based on the maximum value itself.

The path detection section 428 compares the delay profile produced by the IFFT section 234 with the threshold determined by the threshold determining section 426 to detect paths.

The synchronism detection process performed by the path search section 42 having the above structure is now described.

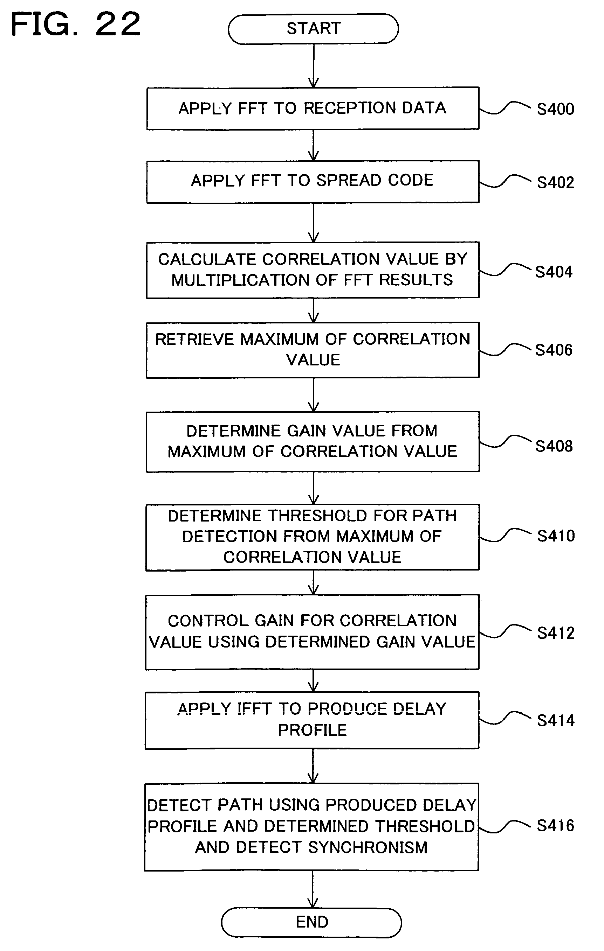

Fig. 22 is a flowchart showing the synchronism detection process performed by the path search section 42.

As shown in this figure, the FFT section 220 initially applies FFT to reception data (or preamble) received from the mobile terminal (S400).

Then, the FFT section 226 applies FFT to scrambling codes prepared within the wireless base station device 100 (code storage section 224) (S402).

Subsequently, the multiplication section 228 calculates the product of the results of the reception data transformed into values in frequency domain by FFT and the results of the scrambling codes transformed into values in frequency domain by FFT for each frequency component (S404). That is, the correlation values in frequency domain are calculated.

Next, the maximum retrieval section 420 retrieves the maximum value of the products of the reception signals and the scrambling codes in frequency domain, i.e., the maximum value of the correlation values in frequency domain (S406).

Thereafter, the gain value determining section 422 determines a gain value in frequency domain based on the number of digits of the maximum value calculated in S406 (S408) . The gain value is determined based on the number of digits of the maximum value because gains are controlled by shifting bits of the resister within the calculating device such as a DSP in most cases. When the number of digits is known, gains can be controlled by adjusting the shift amount such that the number of digits agrees with a given number of digits.

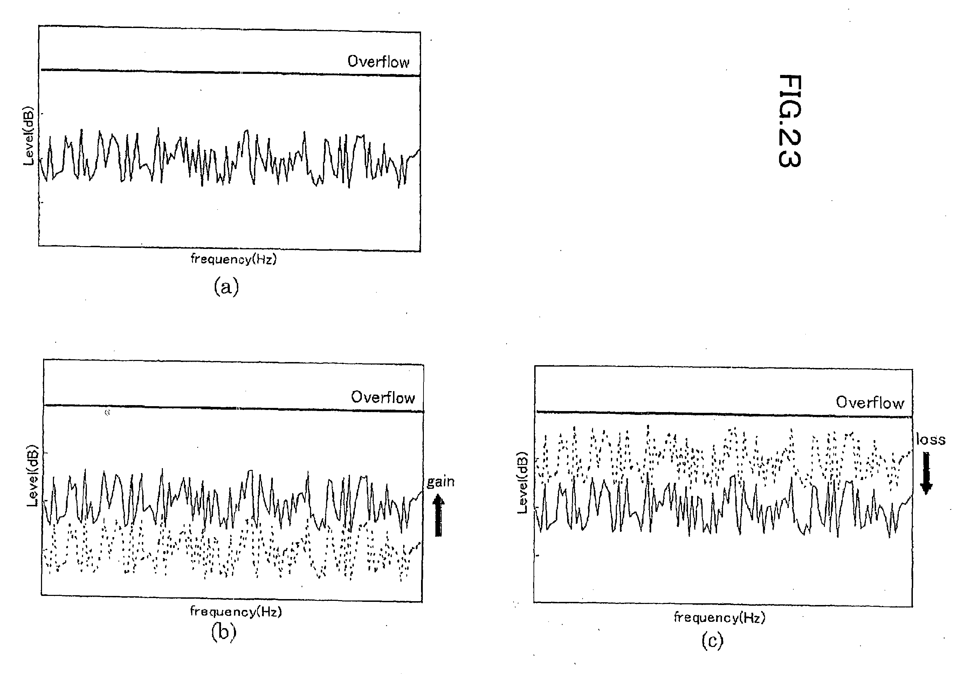

Figs. 23 (a), 23 (b), 23 (c) show delay profiles in frequency domain.

As shown in Fig. 23(a), a large peak is not exhibited in frequency domain regardless of the presence or absence of input signals different from the case in time domain. As a result, the respective frequency components increase in accordance with input signal levels, but overflow is not easily caused even at the maximum value. Thus, gains are raised in case of low level signals as shown in Fig. 23(b) and lowered in case of high level signals as shown in Fig. 23 (c) so that the frequency components can be kept controlled at a given level. In Figs. 23(b) and 23(c), the delay profiles prior to gain control are shown by dotted lines, and the delay profiles after gain control are shown by solid lines.

Next, the threshold determining section 426 determines a threshold used for path detection based on the number of digits of the maximum value obtained in S406 (S410) . A process for setting appropriate threshold according to input signals is performed to increase the signal detection capability. By checking the levels in frequency domain and determining a threshold based on the checking in the synchronism detection processing using FFT, an appropriate threshold can be established.

Then, the gain control section 424 controls gains for the correlation values in frequency domain based on the gain value determined in S408, and the IFFT section 234 also controls gains (S412). Subsequently, the IFFT section 234 returns the correlation values after gain control to time domain by applying IFFT thereto. The IFFT section 234 calculates the correlation values between the reception data and the scrambling codes, and converts the correlation values into power values to produce a delay profile (S414) . Thereafter, the path detection section 428 compares the delay profile obtained in S414 with the threshold determined in S410 to detect paths and then detect synchronism (S416).

Therefore, in the synchronism detection according to the invention, signal gains and thresholds used for path detection can be dynamically varied in accordance with input signal levels utilizing the characteristics of FFT. Thus, the synchronism detection can be appropriately conducted in a wide dynamic range regardless of the level of signals.

Searches by the CDMA method are generally practiced using a large-scale integrated circuit (LSI), and detailed AGC control is required to insure a wide dynamic range. Since despread processing is performed by execution of software in the invention, a wide dynamic range can be provided while greatly decreasing the proportion of hardware. Thus, considerable miniaturization and cost reduction of the system can be realized.

## Claims

1. A base station device for conducting searches for a plurality of channels to each of which different timing is given in time domain, comprising:
first frequency transforming means for transforming signals in time domain having predetermined codes corresponding to each of the channels into signals in frequency domain;
second frequency transforming means for transforming the predetermined codes into codes in frequency domain based on the timing; and
search means for conducing searches for the plural channels based on the correlations between the signals and the predetermined codes in frequency domain after the frequency transform.

2. A base station device according to claim 1, wherein:
the first frequency transforming means transforms the signals into signals in frequency domain setting a number of quantization at a predetermined number; and
the second frequency transforming means transforms the predetermined codes into codes in frequency domain setting a number of quantization at a number calculated by multiplying the predetermined number by a sequential number, and repeats the frequency-transformed codes the number of times equal to the sequential number before outputting the results.

3. A base station device according to claim 1, wherein the search means includes:
limiting means for limiting the frequency-transformed signals to predetermined frequency domain;
time-transforming means for transforming the limited signals into signals in time domain; and
path search means for conducting path searches for the plural channels based on the time-transformed signals.

4. A synchronism detecting device, comprising:
means for multiplying reception signals by despread codes in frequency domain;
retrieval means for retrieving the maximum value of the results of multiplication;
gain value determining means for determining a gain value based on the maximum value;
gain control means for controlling gains for the results of multiplication in frequency domain based on the gain value; and
threshold determining means for determining a threshold used for synchronism detection based on the maximum value.

5. A synchronism detection device according to claim 4, wherein the gain value determining means dynamically determines the gain value based on the number of digits of the maximum value.

6. A synchronism detection device according to claim 5, wherein the threshold determining means dynamically determines the threshold used for synchronism detection based on the number of digits of the maximum value.
